# FASCICULE DE BREVET EUROPEEN

(11) **EP 2 550 597 B1**
(45) Date de publication et mention de la délivrance du brevet: **05.12.2018**
(21) Numéro de dépôt: 11715945.9
(22) Date de dépôt: 18.03.2011
(51) Int. Cl.: G06F 9/445

(54) **PROCEDE, PROGRAMME D'ORDINATEUR ET DISPOSITIF D'OPTIMISATION DE CHARGEMENT ET DE DEMARRAGE D'UN SYSTEME D'EXPLOITATION DANS UN SYSTEME INFORMATIQUE VIA UN RESEAU DE COMMUNICATION**
VERFAHREN, COMPUTERPROGRAMM UND VORRICHTUNG ZUR OPTIMIERUNG DES LADENS UND BOOTEN EINES BETRIEBSSYSTEMS IN EINEM COMPUTERSYSTEM ÜBER EIN KOMMUNIKATIONSNETZWERK
METHOD, COMPUTER PROGRAM AND DEVICE FOR OPTIMIZING LOADING AND BOOTING OF AN OPERATING SYSTEM IN A COMPUTER SYSTEM VIA A COMMUNICATION NETWORK

(30) Priorité: 22.03.2010 FR 1052055
(43) Date de publication de la demande: 30.01.2013
(73) Titulaire: Bull SAS, 78340 Les Clayes-sous-Bois (FR)
(72) Inventeur: TEMPORELLI, Frédéric, F-38130 Echirolles (FR); WELTERLEN, Benoît, F-38000 Grenoble (FR)
(74) Mandataire: Santarelli
(86) Numéro de dépôt international: PCT/FR2011/050560
(87) Numéro de publication internationale: WO 2011/117516

(56) Documents cités:
- WO-A1-03/090109
- JP-A- 2002 182 921
- US-A1- 2004 172 476

## Description

La présente invention concerne le démarrage d'un système informatique et plus particulièrement un procédé, un programme d'ordinateur et un dispositif d'optimisation de chargement et de démarrage d'un système d'exploitation dans un système informatique via un réseau de communication.

La procédure de démarrage d'un système informatique, connue sous le nom de *boot* en terminologie anglo-saxonne, a pour objet l'obtention d'un système d'exploitation, accessible via un périphérique de stockage permanent ou amovible, qui permet ensuite le chargement et l'exécution de programmes applicatifs. Ce système d'exploitation est obtenu par l'intermédiaire d'un programme plus simple, appelé *bootloader* en terminologie anglo-saxonne, exécuté par l'intermédiaire du BIOS (acronyme de *Basic Input Output System* en terminologie anglo-saxonne) généralement contenu dans une mémoire morte de la carte mère du système informatique.

Durant cette phase de démarrage, toutes les composantes logicielles essentielles et nécessaires au fonctionnement du système informatique sont chargées en mémoire vive.

Il est généralement possible de paramétrer le BIOS pour, par exemple, définir l'ordre des périphériques à scruter afin de détecter une zone de démarrage. Il est ainsi possible de démarrer un système informatique via un réseau en obtenant une image du système d'exploitation disponible sur un système de stockage distant dans le réseau. Une telle procédure de démarrage est notamment connue sous le nom de PXE (sigle de *Pre-boot eXecution Environment* en terminologie anglo-saxonne) ou gPXE (version libre de PXE pouvant être utilisée dans un réseau de type InfiniBand ou Ethernet, InfiniBand et Ethernet sont des marques).

Dans cette procédure, les composantes et les directives spécifiques d'exécution du système d'exploitation sont obtenues par le chargement de différents fichiers. Plus précisément, dans le contexte d'un système d'exploitation Linux (Linux est une marque) chargé depuis un réseau, le système d'exploitation minimal se compose typiquement d'au moins un noyau, appelé *kernel* en terminologie anglo-saxonne, et d'un système de fichiers généralement appelé *initrd* (acronyme d*'initial RAM disk* en terminologie anglo-saxonne).

Selon la configuration mise en oeuvre, ce système de fichiers *initrd* peut être ensuite utilisé pour charger directement des applicatifs ou pour donner accès à un système de fichiers plus complet qui peut alors être utilisé par le système d'exploitation. Il est nécessaire de disposer de ces deux composants (*kernel* et *initrd*) pour démarrer le système d'exploitation minimal.

Lorsque ces composants sont chargés, sous forme d'images, le système d'exploitation peut alors être démarré en exécutant le programme contenu dans l'image noyau.

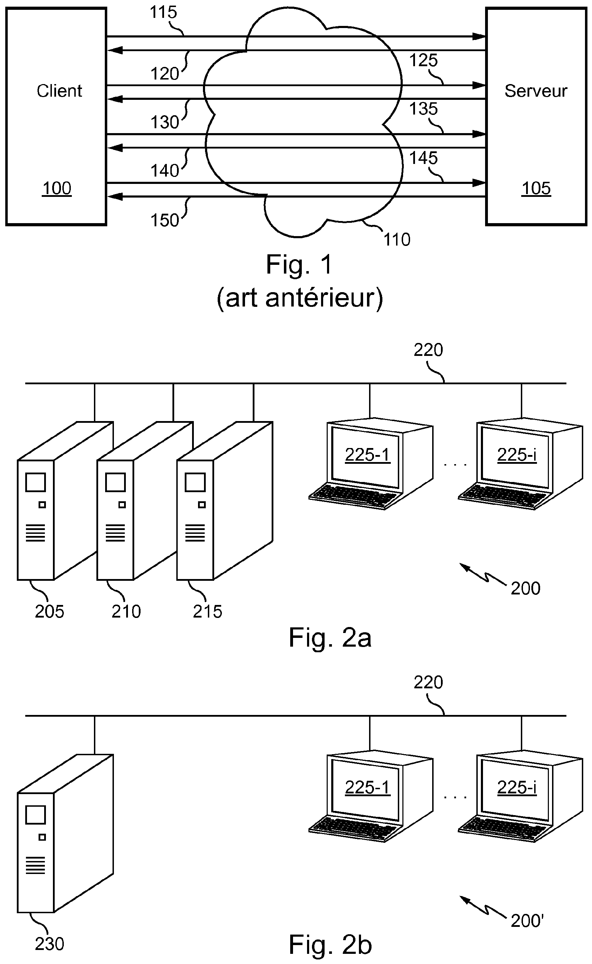

La figure 1 illustre schématiquement une séquence de démarrage, conformément au protocole gPXE, entre un serveur et un client, pour disposer d'un système d'exploitation Linux sur un système informatique à partir d'images accessibles via un réseau de communication.

Comme illustré, un client 100 est ici connecté à un serveur 105 via un réseau de communication 110. Une première étape, référencée 115, consiste en une recherche d'une configuration IP (sigle d'*Internet Protocol* en terminologie anglo-saxonne) sur un serveur DHCP (sigle de *Dynamic Host Configuration Protocol* terminologie anglo-saxonne). Outre les informations de configurations IP, la réponse 120 du serveur DHCP indique une localisation d'un fichier de directives gPXE. La localisation de ce fichier de directives permet également de définir le protocole de transfert devant être utilisé.

Après avoir obtenu du serveur DHCP une configuration IP et une localisation de fichier de directives, le client émet une requête 125 au serveur pour réaliser le transfert du fichier de directives localisé. En réponse (référencée 130), le fichier de directives est reçu du serveur. Typiquement, le fichier de directives reçu défini la localisation d'un fichier *kernel* (image du noyau), la localisation d'un fichier *initrd* (image du système de fichiers associé) et des paramètres devant être transmis au noyau.

Le client transmet alors une requête 135 visant l'obtention du fichier *kernel* qui est reçu du serveur (référence 140) en réponse à cette requête. Ensuite, de façon similaire, le client transmet une requête 145 visant l'obtention du fichier *initrd* qui est reçu du serveur (référence 150) en réponse à cette requête.

Il est observé ici que, dans le cadre de l'utilisation du protocole gPXE, les requêtes et les transferts de fichiers utilisent généralement les protocoles TFTP (sigle de *Trivial File Transfer Protocol* en terminologie anglo-saxonne) ou HTTP (sigle d'*HyperText Transfer Protocol* en terminologie anglo-saxonne). Lorsque le protocole PXE est utilisé, seul un protocole de transfert TFTP est utilisé. En outre, lorsque le protocole PXE est utilisé, le fichier de directives utilise une syntaxe différente et un échange supplémentaire entre le client et le serveur est effectué avant de charger le fichier de directives.

Après le chargement en mémoire des fichiers *kernel* et *initrd,* le *bootloader* se termine en enchaînant sur l'exécution du point d'entrée du noyau qui utilise alors le système de fichiers fourni par le fichier *initrd*. Cette amorce du système d'exploitation se poursuit, en général, par l'accès à un système de fichiers plus complet à travers le réseau et à l'utilisation de ce système de fichiers pour remplacer le système de fichier *initrd*.

De façon analogue, selon le protocole PXE, les phases essentielles de mise en oeuvre du système d'exploitation minimal sont, après l'obtention d'une configuration réseau, le chargement d'une extension de code PXE, par exemple le fichier *pxelinux*, puis le chargement des directives suivantes de chargement, puis le chargement d'une image d'un noyau (fichier *kernel*) et ensuite le chargement d'une image d'un système de fichiers (fichier *initrd*). Par conséquent, le protocole gPXE est similaire au protocole PXE à l'exception de l'étape de chargement d'une extension de code PXE qui n'est pas nécessaire.

Les directives de chargement concernent ici la localisation du fichier *kernel* (protocole et chemin d'accès à ce fichier suivant ce protocole), la localisation du fichier *initrd* (protocole et chemin d'accès à ce fichier suivant ce protocole) et les paramètres utilisés par le noyau tels que, par exemple, les caractéristiques d'utilisation de ports série pour traiter les interactions d'un utilisateur.

Il résulte de ces différentes étapes que, lorsque les protocoles PXE ou gPXE sont utilisés, le temps nécessaire entre la mise sous tension d'un système informatique et la disponibilité du système d'exploitation n'est pas négligeable et peut être particulièrement pénalisant, d'autant plus dans des systèmes informatiques en environnement flexible dont l'optimisation est particulièrement importante.

La demande de brevet WO 03/090109 décrit un système et une méthode de démarrage d'un système d'exploitation sur des ordinateurs, via un réseau, utilisant un mode d'hibernation. Le noyau du système d'exploitation est transmis simultanément à plusieurs ordinateurs, via le réseau. Après avoir été téléchargé, le système d'exploitation est démarré sur ces ordinateurs. Il peut faire appel à d'autres composantes logicielles stockées dans le serveur, notamment des images d'hibernation et des fichiers applicatifs.

La demande de brevet US 2004/0172476 décrit un système de transmission de données pour télécharger des données de plusieurs sources de façon parallèle. Le système comprend un ordonnanceur de sources pour déterminer un ordonnancement de téléchargement et contrôler les sources devant être utilisées à un instant donné, un gestionnaire de priorité qui détermine la latence et le débit des canaux de communication utilisés et ajuste l'ordonnancement de téléchargement en conséquence et un répartiteur d'entrée/sortie pour produire un flux de sortie des données téléchargées à destination d'une ou de plusieurs applications ou d'un utilisateur. Le système décrit est particulièrement adapté au téléchargement de données volumineuses, notamment des données multimédia.

L'invention permet de résoudre au moins un des problèmes exposés précédemment.

L'invention a ainsi pour objet un procédé de chargement et de démarrage pour un système informatique relié à un réseau de communication auquel est connecté au moins un serveur, ledit au moins un serveur comprenant au moins une image d'un noyau d'un système d'exploitation minimal et une image d'un système de fichiers associé, le procédé comprenant des étapes de chargement de ladite image dudit noyau et de ladite image dudit système de fichiers, l'une desdites étapes de chargement de ladite image dudit noyau et de chargement de ladite image dudit système de fichiers étant lancée avant la fin de l'exécution de l'autre desdites étapes de chargement de ladite image dudit noyau et de chargement de ladite image dudit système de fichiers.

Le procédé selon l'invention permet ainsi de réduire le délai lié au transfert des images d'un noyau et d'un système de fichiers lors du démarrage d'un système d'exploitation.

De façon avantageuse, lesdites étapes de chargement de ladite image dudit noyau et de chargement de ladite image dudit système de fichiers sont lancées sensiblement au même instant. Ainsi, le temps de transfert des images d'un noyau et d'un système de fichiers est optimisé quelle que soit la taille des images du noyau et du système de fichiers.

Selon un mode de réalisation particulier, le procédé comprend en outre une étape préliminaire de chargement de directives de chargement de ladite image dudit noyau et/ou de ladite image dudit système de fichiers. Les directives de chargement comprennent, de préférence, des informations de localisation des images du noyau et du système de fichiers, des informations sur les protocoles de communication utilisés pour accéder à ces images et/ou des paramètres pouvant être utilisés par le noyau.

Toujours selon un mode de réalisation particulier, le procédé comprend en outre une étape préliminaire de chargement d'un programme d'amorçage, ledit programme d'amorçage comprenant des instructions pour l'exécution desdites étapes de chargement de ladite image dudit noyau et/ou de chargement de ladite image dudit système de fichiers.

Toujours selon un mode de réalisation particulier, le protocole d'accès audit programme d'amorçage est un protocole standard de type PXE ou de type gPXE.

Le protocole de chargement de ladite image dudit noyau et/ou de chargement de ladite image dudit système de fichiers est, de préférence, un protocole du type TFTP ou du type HTTP.

Le procédé selon l'invention est particulièrement adapté pour une mise en oeuvre dans un noeud d'un cluster dont l'optimisation est particulièrement importante.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un dispositif comprenant des moyens adaptés à la mise en oeuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre schématiquement une séquence de démarrage, conformément au protocole gPXE, entre un serveur et un client, pour disposer d'un système d'exploitation Linux sur un système informatique à partir d'images accessibles via un réseau de communication ;
- la figure 2, comprenant les figures 2a et 2b, illustre deux exemples d'environnements informatiques dans lesquels l'invention peut être mise en oeuvre ;
- la figure 3 illustre certaines étapes d'une séquence de démarrage d'un noeud de cluster ou d'un poste client conformément à l'invention ;
- la figure 4 illustre schématiquement un exemple d'algorithme mis en oeuvre dans un noeud de cluster ou un poste client pour permettre son démarrage à partir d'un réseau de communication ; et,
- la figure 5 illustre un exemple d'architecture d'un noeud de cluster ou d'un poste client adapté à mettre en oeuvre l'invention.

De façon générale, l'invention a pour objet un chargement parallèle des données devant être utilisées pour démarrer un système informatique, typiquement un noeud de cluster ou un poste client, via un réseau de communication. Le chargement parallèle des données vise notamment des données liées au noyau du système d'exploitation et au système de fichiers associé.

La figure 2, comprenant les figures 2a et 2b, illustre deux exemples d'environnements informatiques dans lesquels l'invention peut être mise en oeuvre.

Comme illustré sur la figure 2a, l'environnement informatique 200 comprend ici trois serveurs 205, 210 et 215 reliés à un réseau de communication 220, par exemple un réseau Ethernet ou InfiniBand, auquel sont également connectés des noeuds d'un cluster ou des postes clients référencés 225-1 à 225-i. Le serveur 205 est ici un serveur d'adresses, par exemple un serveur DHCP, configuré pour fournir une localisation permettant la poursuite d'un démarrage de systèmes clients, en utilisant, par exemple, les protocoles PXE ou gPXE. Le serveur 210 est ici un serveur à partir duquel peuvent être chargé un fichier PXE spécifique, notamment le fichier *pxelinux*, et des fichiers de directives PXE ou gPXE. Le serveur 215 est un serveur à partir duquel peuvent être chargées une image d'un noyau, c'est-à-dire typiquement un fichier *kernel*, et une image d'un système de fichiers, c'est-à-dire typiquement un fichier *initrd*. Les serveurs 210 et 215 sont, par exemple, des serveurs de fichiers TFTP ou HTTP.

Au démarrage, chacun des noeuds ou postes clients 225-1 à 225-i obtient une adresse réseau pour s'identifier, de préférence une adresse de type IP, à partir du serveur 205, ainsi que la localisation d'une extension PXE, par exemple *pxelinux*, ou de directives gPXE sur le serveur 210. Les noeuds ou postes clients peuvent alors charger des instructions de démarrage PXE ou gPXE du serveur 210, c'est-à-dire, notamment, les directives de chargement et, le cas échéant, une extension de code PXE. Puis, en fonction des directives de chargement reçues, les images du noyau et du système de fichiers devant être utilisés, c'est-à-dire, par exemple, les fichiers *kernel* et *initrd*, sont transférés depuis le serveur 215.

L'environnement informatique 200' représenté sur la figure 2b se distingue de l'environnement 200 décrit précédemment en ce que les serveurs 205, 210 et 215 sont regroupés dans un seul serveur 230, relié au réseau de communication 220 auquel sont également connectés les noeuds ou postes clients référencés 225-1 à 225-i. Par conséquent, le serveur 230 est un serveur ayant une fonction de serveur d'adresses tel qu'un serveur DHCP et de serveur de fichiers pour PXE ou gPXE, à partir duquel peuvent être chargés les images du noyau et du système de fichiers devant être utilisés.

De façon similaire, il est également possible d'utiliser deux serveurs, par exemple un serveur d'adresses tel qu'un serveur DHCP, permettant également le transfert de fichiers d'extension PXE et de directives PXE ou gPXE, et un serveur à partir duquel peuvent être chargées les images du noyau et du système de fichiers devant être utilisés.

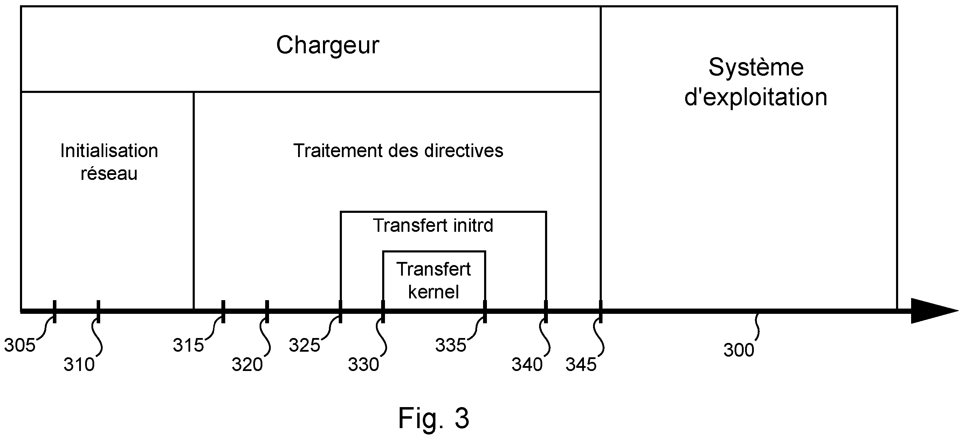

La figure 3 illustre certaines étapes d'une séquence de démarrage d'un noeud ou poste client conformément à l'invention. Ces étapes sont représentées sur une ligne de temps 300.

Comme illustré, il est nécessaire, dans un premier temps, d'obtenir une configuration réseau (étape 305) pour le noeud ou poste client et, si nécessaire, pour les serveurs à partir desquels peuvent être chargés des directives de chargement ainsi que des images du noyau et du système de fichiers devant être utilisés (par exemple des fichiers *kernel* et *initrd*).

Après la configuration réseau du noeud ou du poste client (étape 310), c'est-à-dire dès que la configuration réseau est connue (si le protocole gPXE est utilisé) ou lorsque l'extension PXE a été chargée (si le protocole PXE est utilisé), le chargement des directives de chargement commence (étape 315).

Lorsque les directives de chargement ont été reçues (étape 320), le chargement des images du noyau et du système de fichiers visées dans les directives (par exemple des fichiers *kernel* et *initrd*) peut commencer (étapes 330 et 325, respectivement). Le chargement de l'image du noyau commence en même temps que celui de l'image du système de fichiers ou après, mais avant que l'image du système de fichiers soit totalement chargée. Il est observé que, de façon générale, le chargement de l'image du système de fichiers se poursuit alors que l'image du noyau a été chargée (étape 335).

Le chargement de l'image du noyau peut également commencer avant celui de l'image du système de fichiers à condition que ce dernier commence avant que l'image du noyau soit totalement chargée.

Après que les images du noyau et du système de fichiers aient été chargées (étapes 335 et 340), le noyau, c'est-à-dire le système d'exploitation minimal, est amorcé (étape 345).

Il est observé que la taille de l'image du noyau telle qu'un fichier *kernel* est typiquement comprise entre 2 à 5 Mo tandis que celle du système de fichiers telle qu'un fichier *initrd* est généralement comprise entre 2 et 20 Mo et peut atteindre 100 Mo. Ainsi, le chargement simultané de l'image du noyau et de l'image du système de fichiers permet d'économiser le temps de chargement de celle dont la taille est la plus petite.

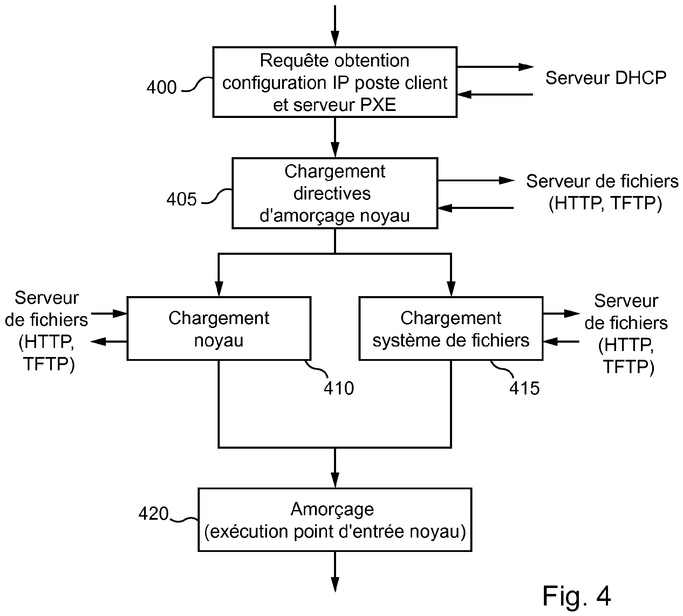

La figure 4 illustre schématiquement un exemple d'algorithme mis en oeuvre dans un noeud de cluster ou un poste client pour permettre son démarrage à partir d'un réseau de communication.

Comme décrit précédemment, une première étape (étape 400) consiste en une requête d'obtention d'une configuration réseau pour ce noeud ou ce poste client ainsi que, si nécessaire, pour le ou les serveurs à partir desquels peuvent être chargés les directives de chargement ainsi que les images du noyau et du système de fichiers devant être utilisés. A titre d'illustration, le BIOS du noeud ou du poste client demande son adresse IP ainsi que l'adresse IP d'un serveur PXE ou gPXE selon le protocole DHCP.

Dans une étape suivante (étape 405), le noeud ou le poste client charge les directives de chargement à partir du serveur PXE ou gPXE dont l'adresse a été obtenue précédemment. A nouveau, cette demande peut émaner du BIOS du noeud ou du poste client. Si le protocole utilisé est le protocole PXE, cette étape comprend une étape préliminaire de chargement d'une extension de code PXE, par exemple de *pxelinux*. Le programme d'amorçage ou *bootloader* du noeud ou du poste client (si le protocole gPXE est utilisé) ou reçu du serveur PXE (si le protocole PXE est utilisé) permet, en combinaison avec les directives de chargement, de lancer le chargement de l'image du noyau et de l'image du système de fichiers.

Il est observé ici que les adresses du ou des serveurs permettant le chargement des images du noyau et du système de fichiers sont généralement données dans les directives de chargement. Alternativement, elles peuvent être obtenues via une requête distincte du noeud ou du poste client à un serveur d'adresses.

Le noeud ou le poste client lance alors le chargement des images du noyau du système d'exploitation minimal (étape 410) et de son système de fichiers (étape 415). A ces fins, pour lancer le chargement simultané des images du noyau et du système de fichiers correspondant, le protocole de démarrage (*pxelinux* ou gPXE) est modifié afin que les requêtes de chargement ne soient pas traitées séquentiellement.

Selon un mode de réalisation particulier, une indication des directives de chargement permet d'activer ou d'inhiber une telle fonctionnalité.

Comme indiqué précédemment, les images du noyau et du système de fichiers correspondant peuvent être obtenues à partir d'un même serveur ou de serveurs distincts. Si elles sont obtenues à partir de serveurs distincts, il n'y a aucun conflit pour l'accès aux fichiers et le traitement des requêtes de chargement. Dans le cas contraire, les chargements sont traités en parallèles par le serveur de fichiers.

Un mécanisme d'attente est alors avantageusement mis en oeuvre pour s'assurer que les images du noyau et du système de fichiers sont entièrement chargées en mémoire avant de poursuivre l'amorce du système d'exploitation.

L'exécution du point d'entrée du noyau (étape 420) termine le traitement de chargement des images du noyau et du système de fichiers et commence l'amorce du système d'exploitation.

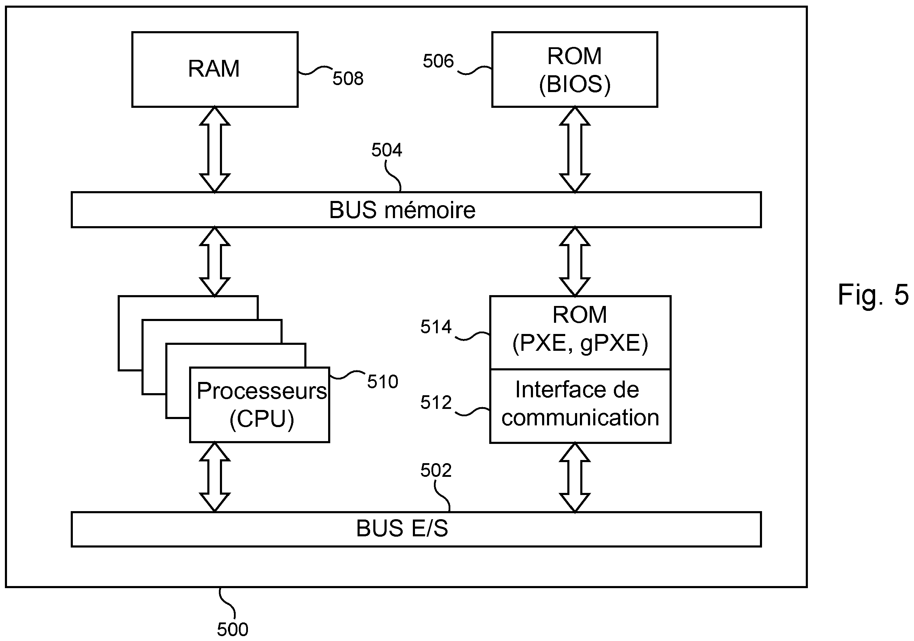

Un exemple d'architecture d'un noeud de cluster ou d'un poste client adapté à mettre l'algorithme décrit en référence à la figure 4 est illustré sur la figure 5.

Le dispositif 500 comporte ici un bus de communication 502 permettant l'échange de données avec des éléments externes au dispositif 500 (bus d'entrée/sortie) et un bus de communication 504 dédié aux échanges de données avec une mémoire.

Une mémoire morte 506 (ROM, acronyme de *Read Only Memory* en terminologie anglo-saxonne) contenant le programme BIOS du système ainsi qu'une mémoire vive 508 (RAM, acronyme de *Random Access Memory* en terminologie anglo-saxonne) comportant des registres adaptés à enregistrer des variables et paramètres créés et modifiés au cours de l'exécution des programmes précités ainsi que le noyau et le système de fichiers sont connectées au bus 504.

Une ou plusieurs unités centrales de traitement ou microprocesseurs 510 (ou CPU, sigle de *Central Processing Unit* en terminologie anglo-saxonne) ainsi qu'une interface de communication 512 adaptée à transmettre et à recevoir des données à travers un réseau sont connectées aux bus 502 et 504. L'interface de communication 512 comprend ici une mémoire morte d'extension 514, appelée *expansion ROM* en terminologie anglo-saxonne, qui contient un programme permettant l'amorçage du système d'exploitation mis en oeuvre à travers un réseau.

Les bus de communication 502 et 504 permettent la communication et l'interopérabilité entre les différents éléments inclus dans le dispositif 500 ou reliés à lui. La représentation des bus n'est pas limitative et, notamment, les unités centrales sont susceptibles de communiquer des instructions à tout élément du dispositif 500 directement ou par l'intermédiaire d'un autre élément du dispositif 500.

Le code exécutable de chaque programme permettant au dispositif programmable de mettre en oeuvre les processus selon l'invention, peut être stocké, par exemple, dans la mémoire morte d'extension 514. Le protocole gPXE permet également de charger ces composants logiciels dans la mémoire vive 508.

De manière plus générale, le ou les programmes peuvent être chargés dans un des moyens de stockage du dispositif 500 avant d'être exécutés.

Les unités centrales 510 commandent et dirigent l'exécution des instructions ou portions de code logiciel du ou des programmes selon l'invention, instructions qui sont stockées dans la mémoire morte d'extension 514, dans la mémoire morte 506 ou dans tout autre élément de stockage précités.

Naturellement, pour satisfaire des besoins spécifiques, une personne compétente dans le domaine de l'invention pourra appliquer des modifications dans la description précédente.

## Revendications

1. Procédé de chargement et de démarrage pour un système informatique (225-1, 225-i) relié à un réseau de communication auquel est connecté au moins un serveur (205, 210, 215, 230), ledit au moins un serveur comprenant au moins une image d'un noyau d'un système d'exploitation minimal et une image d'un système de fichiers associé, le procédé comprenant des étapes de chargement de ladite image dudit noyau (330, 410) et de ladite image dudit système de fichiers (325, 415), ce procédé étant **caractérisé en ce que** l'une desdites étapes de chargement de ladite image dudit noyau et de chargement de ladite image dudit système de fichiers est lancée avant la fin de l'exécution de l'autre desdites étapes de chargement (335, 340) de ladite image dudit noyau et de chargement de ladite image dudit système de fichiers.

2. Procédé selon la revendication précédente selon lequel lesdites étapes de chargement de ladite image dudit noyau et de chargement de ladite image dudit système de fichiers sont lancées sensiblement au même instant.

3. Procédé selon la revendication 1 ou la revendication 2 comprenant en outre une étape préliminaire de chargement (405) de directives de chargement de ladite image dudit noyau et/ou de ladite image dudit système de fichiers.

4. Procédé selon l'une quelconque des revendications précédentes comprenant en outre une étape préliminaire de chargement d'un programme d'amorçage, ledit programme d'amorçage comprenant des instructions pour l'exécution desdites étapes de chargement de ladite image dudit noyau et/ou de chargement de ladite image dudit système de fichiers.

5. Procédé selon la revendication précédente selon lequel le protocole d'accès audit programme d'amorçage est un protocole de type PXE.

6. Procédé selon la revendication 3 selon lequel le protocole d'accès audit programme d'amorçage est un protocole de type gPXE.

7. Procédé selon l'une quelconque des revendications précédentes selon lequel le protocole de chargement de ladite image dudit noyau et/ou de chargement de ladite image dudit système de fichiers est un protocole du type TFTP ou du type HTTP.

8. Procédé selon l'une quelconque des revendications précédentes, ledit procédé étant mis en oeuvre dans un noeud d'un cluster.

9. Programme d'ordinateur comprenant des instructions adaptées à la mise en oeuvre de chacune des étapes du procédé selon l'une quelconque des revendications précédentes lorsque ledit programme est exécuté sur un ordinateur.

10. Dispositif comprenant des moyens adaptés à la mise en oeuvre de chacune des étapes du procédé selon l'une quelconque des revendications 1 à 8.

## Patentansprüche

1. Lade- und Inbetriebnahmeverfahren für ein Informatiksystem (225-1, 225-i), das an ein Kommunikationsnetz angeschlossen ist, auf das mindestens ein Server (205, 210, 215, 230) aufgeschaltet ist, wobei der mindestens eine Server mindestens ein Bild eines Kerns eines minimalen Betriebssystems und ein Bild eines zugeordneten Dateisystems umfasst, wobei das Verfahren Schritte des Ladens des Bilds des Kerns (330, 410) und des Bilds des Dateisystems (325, 415) umfasst, wobei dieses Verfahren **dadurch gekennzeichnet ist, dass** einer der Schritte des Ladens des Bilds des Kerns und des Ladens des Bilds des Dateisystems vor dem Ende des Ausführens des anderen der Schritte des Ladens (335, 340) des Bilds des Kerns und des Ladens des Bilds des Dateisystems gestartet wird.

2. Verfahren nach dem vorhergehenden Anspruch, wobei die Schritte des Ladens des Bilds des Kerns und des Ladens des Bilds des Dateisystems im Wesentlichen im selben Augenblick gestartet werden.

3. Verfahren nach Anspruch 1 oder Anspruch 2, darüber hinaus einen vorläufigen Schritt des Ladens (405) von Richtlinien für das Laden des Bilds des Kerns und/oder des Bilds des Dateisystems umfassend.

4. Verfahren nach einem der vorhergehenden Ansprüche, darüber hinaus einen vorläufigen Schritt des Ladens eines Einleitprogramms umfassend, wobei das Einleitprogramm Instruktionen für die Ausführung der Schritte des Ladens des Bilds des Kerns und/oder des Ladens des Bilds des Dateisystems umfasst.

5. Verfahren nach dem vorhergehenden Anspruch, wobei das Zugangsprotokoll zum Einleitprogramm ein Protokoll des Typs PXE ist.

6. Verfahren nach Anspruch 3, wobei das Zugangsprotokoll zum Einleitprogramm ein Protokoll des Typs gPXE ist.

7. Verfahren nach einem der vorhergehenden Ansprüche, wobei das Protokoll zum Laden das Bild des Kerns und/oder zum Laden des Bilds des Dateisystems ein Protokoll des Typs TFTP oder des Typs HTTP ist.

8. Verfahren nach einem der vorhergehenden Ansprüche, wobei das Verfahren im Knoten eines Clusters umgesetzt wird.

9. Computerprogramm mit Instruktionen, die zur Umsetzung jedes der Schritte des Verfahrens nach einem der vorhergehenden Ansprüche angepasst sind, wenn das Programm auf einem Computer ausgeführt wird.

10. Vorrichtung mit Mitteln, die zur Umsetzung jedes der Schritte des Verfahrens nach einem der Ansprüche 1 bis 8 angepasst sind.

## Claims

1. A method of loading and booting for a computer system (225-1, 225-i) linked to a communication network to which is connected at least one server (205, 210, 215, 230), said at least one server comprising at least one image of a kernel of a minimal operating system and an image of an associated file system, the method comprising steps of loading said image of said kernel (330, 410) and said image of said file system (325, 415), this method being **characterized in that** one of said steps of loading said image of said kernel and of loading said image of said file system is launched before the end of the execution of the other of said steps of loading (335, 340) said image of said kernel and of loading said image of said file system.

2. A method according to the preceding claim wherein said steps of loading said image of said kernel and of loading said image of said file system are launched substantially at the same time.

3. A method according to claim 1 or claim 2 further comprising a preliminary step (405) of loading directives for loading said image of said kernel and/or said image of said file system.

4. A method according to any one of the preceding claims further comprising a preliminary step of loading a bootloader, said bootloader comprising instructions for the execution of said steps of loading said image of said kernel and/or of loading said image of said file system.

5. A method according to the preceding claim wherein the protocol for access to said bootloader is a protocol of PXE type.

6. A method according to claim 3, wherein the protocol for access to said bootloader is a protocol of gPXE type.

7. A method according to any one of the preceding claims wherein the protocol for loading said image of said kernel and/or for loading said image of said file system is a protocol of TFTP type or of HTTP type.

8. A method according to any one of the preceding claims, said method being implemented in a node of a cluster.

9. A computer program comprising instructions adapted for carrying out each of the steps of the method according to any one of the preceding claims when said program is executed on a computer.

10. A device comprising means adapted for the implementation of each of the steps of the method according to any one of claims 1 to 8.
